# EUROPÄISCHE PATENTSCHRIFT

(11) **EP 3 517 487 B1**
(45) Veröffentlichungstag und Bekanntmachung des Hinweises auf die Patenterteilung: **11.10.2023**
(21) Anmeldenummer: 19157792.3
(22) Anmeldetag: 12.01.2017
(51) Int. Cl.: B67D 1/08

(54) **KARTUSCHENAUFNAHME, KARTUSCHENSYSTEM, GETRÄNKEZUBEREITUNGSMASCHINE UND VERFAHREN ZUR HERSTELLUNG EINES GETRÄNKS**
CARTRIDGE HOLDER, CARTRIDGE SYSTEM, BEVERAGE PREPARATION MACHINE AND METHOD FOR PREPARING A BEVERAGE
LOGEMENT DE CARTOUCHE, SYSTÈME DE CARTOUCHES, MACHINE DE PRÉPARATION DE BOISSONS ET PROCÉDÉ DE FABRICATION D'UNE BOISSON

(30) Priorität: 12.01.2016 DE 202016200254 U; 01.07.2016 DE 102016212012; 01.07.2016 DE 102016212013; 27.09.2016 DE 102016218509; 27.09.2016 DE 102016218507; 29.09.2016 DE 102016218884
(43) Veröffentlichungstag der Anmeldung: 31.07.2019
(62) Teilanmeldung aus: 17700803.4
(73) Patentinhaber: Freezio AG, 8580 Amriswil (CH)
(72) Erfinder: KRÜGER, Marc, 51467 Bergisch Gladbach (DE); EMPL, Günter, 51429 Bergisch Gladbach (DE); FISCHER, Daniel, 8590 Romanshorn (CH)
(74) Vertreter: Loock, Jan Pieter

(56) Entgegenhaltungen:
- EP-A1- 2 080 454
- DE-A1-102009 049 945
- DE-U1- 29 825 074
- GB-A- 2 020 631
- US-A- 4 376 496
- US-A1- 2002 130 140

## Beschreibung

### Stand der Technik

Die vorliegende Erfindung geht aus von einem in eine Getränkezubereitungsmaschine einsetzbares Kartuschensystem zur Herstellung eines Getränks, insbesondere eines Kaltgetränks, aufweisend eine Kartusche, die ein mit einer Getränkesubstanz gefülltes Reservoir aufweist, und eine mit der Kartusche reversibel verbindbare Kartuschenaufnahme, in welche die Kartusche reversibel einsetzbar ist, und mit einer Kartuschenentladeeinrichtung, welche ein zumindest teilweises Überführen der Getränkesubstanz vom Reservoir in eine Mischkammer bewirkt.

Solche Systeme sind aus dem Stand der Technik, beispielsweise aus EP 1 806 314 A1, EP 2 080 454 A1 und US 2002/130140 A1, grundsätzlich bekannt und werden zur Herstellung von Getränken aus vorportionierten Kartuschen verwendet. Die Herstellung von Getränken mit solchen Systemen ist für den Anwender äußerst komfortabel, da er lediglich eine Kartusche einsetzen und einen Startknopf drücken muss. Die Getränkezubereitungsmaschine übernimmt dann vollautomatisiert die Erzeugung desselben, das heißt insbesondere, dass die Getränkesubstanz mit einer vorbestimmten Menge an Flüssigkeit, insbesondere kaltem und karbonisiertem Wasser vermischt wird und in ein Trinkgefäß geleitet wird. Auf diese Weise lassen sich insbesondere Mixgetränke für den Anwender deutlich einfacher, schneller und mit weniger Aufwand herstellen. Der Anwender kann dabei aus einer Vielzahl von verschiedenen Kartuschen auswählen, so dass er je nach Belieben unterschiedliche Getränke herstellen kann.

Eine große Herausforderung bei solchen Systemen ist, während der Herstellung des Getränks eine Rückkontamination der Getränkezubereitungsmaschine sicher und vollständig zu unterbinden, da andernfalls die Gefahr einer Verunreinigung bis hin zur Schimmelpilzbildung innerhalb der Getränkezubereitungsmaschine besteht. Dies gilt insbesondere für Kartuschen die fruchtzuckerhaltige, alkoholhaltige oder milchhaltige Getränkesubstanzen enthalten.

Bei aus dem Stand der Technik bekannten Systemen wird üblicherweise die Kartusche in eine als fester Bestandteil der Getränkezubereitungsmaschine ausgebildete Kartuschenaufnahme eingesetzt und sodann die Kartusche auf beiden Seiten, d.h. auf einer Einlassseite und auf einer Auslassseite geöffnet. Auf der Einlassseite wird anschließend mittels einer Fluidzuführung Wasser in die Kartusche eingeleitet, so dass sich das Getränk durch Vermischen der Getränkesubstanz mit dem Wasser schon innerhalb des Reservoirs in der Kartusche bildet. Auf der Auslassseite verlässt das Getränk die Kartusche und wird zu einem Trinkgefäß geleitet. Das Wasser durchströmt das Reservoir hierbei vollständig und bewirkt somit ein Ausleiten der Getränkesubstanz aus dem Reservoir.

Es hat sich gezeigt, dass beim Einleiten des Wassers direkt in das mit der Getränkesubstanz gefüllte Reservoir eine Rückkontamination der Zuführung nicht vollständig verhindert werden kann, weil das Reservoir üblicherweise vollständig mit der Getränkesubstanz gefüllt ist und dadurch beim Einleiten des Wassers ein erheblicher Druckanstieg im Reservoir stattfindet. Sowohl dieser Druckanstieg im Reservoir als auch das Durchspülen des Reservoirs sorgt dafür, dass während und/oder kurz nach der Getränkeherstellung kleinste Tropfen, Partikel und/oder Schwebestoffe der Getränkesubstanz in die Fluidzuführung gelangen und dort zu einer kontinuierlichen Verunreinigung der Getränkezubereitungsmaschine führen.

### Offenbarung der Erfindung

Es ist daher eine Aufgabe der vorliegenden Erfindung ein Kartuschensystem, eine Getränkezubereitungsmaschine und ein Verfahren zur Herstellung eines Getränks durch Einsetzen des Kartuschensystems in eine Getränkezubereitungsmaschine zur Verfügung zu stellen, bei welchem eine Rückkontamination der Getränkezubereitungsmaschine wirksam vermieden wird.

Diese Aufgabe wird durch ein Kartuschensystem nach Anspruch 1 gelöst.

Das erfindungsgemäße Kartuschensystem hat gegenüber dem Stand der Technik den Vorteil, dass die Fluidzuführung anders als beim Stand der Technik nicht in das Reservoir der Kartusche, sondern in die vom Reservoir separierte Mischkammer mündet. Hierdurch wird wirksam und in einer einfach und kostengünstig zu realisierenden Weise verhindert, dass durch die Fluidzuführung eine Rückkontamination der Getränkezubereitungsmaschine erfolgt. Hierfür wird das Reservoir nicht von dem Fluid durchspült, sondern gemäß der vorliegenden Erfindung gelangen die Getränkesubstanz und das Fluid getrennt voneinander in die Mischkammer. Das Fluid wird direkt in die Mischkammer geleitet, während die Getränkesubstanz durch die Kartuschenentladeeinrichtung und unabhängig vom Fluid in die Mischkammer überführt wird. Es hat sich gezeigt, dass hierdurch eine Rückkontamination der Getränkezubereitungsmaschine in einer im Vergleich zum Stand der Technik deutlich wirksameren Art und Weise unterbunden wird, insbesondere da im Reservoir kein direkt auf die Fluidzuführung wirkender Überdruck erzeugt wird. Die Ausbildung der Mischkammer in der Kartuschenaufnahme, die in die Getränkezubereitungsmaschine reversibel einsetzbar ist, sorgt vorteilhafterweise dafür, dass die Mischkammer Teil des austauschbaren Kartuschensystem ist. Auf diese Weise wird eine Verunreinigung der Getränkezubereitungsmaschine durch die Getränkesubstanz wirksam vermieden, weil lediglich Teile des austauschbaren Einweg- oder Mehrwegkartuschensystems mit der Getränkesubstanz in Kontakt gelangen. Denkbar ist auch, dass die Kartusche bei jedem Getränkeherstellungsvorgang ausgetauscht wird, während die Kartuschenaufnahme für mehrere Getränkeherstellungsvorgänge verwendet wird, bevor auch sie ausgetauscht wird. Vorzugsweise ist das Reservoir des Kartuschensystems durch ein Dichtelement verschlossen, welches erst beim oder nach dem Einsetzen des Kartuschensystems in die Getränkezubereitungsmaschine geöffnet wird. Das Dichtelement dient dazu, die Kartusche beim Transport oder der Lagerung aromadicht zu verschließen, wodurch beispielsweise eine lange Haltbarkeit der Kartusche zu erzielen ist.

Vorteilhafte Ausgestaltungen und Weiterbildungen der Erfindung sind den Unteransprüchen, sowie der Beschreibung unter Bezugnahme auf die Zeichnungen entnehmbar.

Gemäß einer bevorzugten Ausführungsform der vorliegenden Erfindung ist vorgesehen, dass die Kartusche fest oder lösbar mit der Kartuschenaufnahme verbunden ist bzw. die Kartuschenaufnahme fest oder lösbar mit der Kartusche verbindbar ist. Vorzugsweise ist die Kartuschenaufnahme reversibel an der Kartusche befestigt, besonders bevorzugt durch eine Rastverbindung. Denkbar ist beispielsweise, dass die Kartusche eine Art Flaschenhals (aufweisend die Kartuschenöffnung) mit einem umlaufenden Halteflansch umfasst und die Kartuschenaufnahme auf den Flaschenhals geclipst wird. Dabei hintergreifen insbesondere elastische Rastelemente, wie beispielsweise Halteärmchen den Halteflansch. Die Kartusche ist insbesondere als Einmalbehältnis für die Getränkesubstanz vorgesehen, insbesondere recycelbar. Vorteilhafterweise kann die Kartuschenaufnahme mehrfach verwendet werden, indem sie an verschiedenen Kartuschen befestigbar ist. Zudem wird die Herstellung des Kartuschensystem vereinfacht, da die Kartusche und die Kartuschenaufnahme separat hergestellt werden können und lediglich die Kartuschenaufnahme anschließend auf die Kartusche aufgeclipst wird. Die Kartusche umfasst insbesondere eine eckige, runde oder abgerundete Flasche. Die Kartusche ist insbesondere aus Kunststoff in einem Blas-Spritzform-formverfahren oder in einem Spritzformverfahren oder mit weiteren Formverfahren hergestellt.

Grundsätzlich wäre aber auch ein Tiefziehverfahren zur Herstellung der Kartusche vorstellbar. Ebenso wäre es natürlich auch denkbar, dass die Kartusche mehrfach verwendbar ist.

Gemäß vorliegenden Erfindung ist vorgesehen, dass die Kartuschenentladeeinrichtung einen Druckluftanschluss zum Anschluss an die Druckluftquelle und eine Druckluftleitung umfasst, welche sich vom Druckluftanschluss zu einem Druckluftauslass erstreckt, und wobei der Druckluftauslass insbesondere in Richtung des Reservoirs der Kartusche vorsteht, um Druckluft in das Reservoir einzublasen. Die in die Kartuschenaufnahme integrierte Kartuschenentladeeinrichtung umfasst im Sinne der vorliegenden Erfindung also zunächst nur eine Druckluftleitung, durch welche Druckluft von außen in das Reservoir eingeleitet werden kann. Das Kartuschensystem derart ausgebildet ist, dass durch die Druckluft die Getränkesubstanz aus dem Reservoir in die Mischkammer gedrückt wird. Die Druckluft wird insbesondere von der Getränkezubereitungsmaschine bereitgestellt. Denkbar ist, dass eine Druckluftquelle direkt an den Druckluftanschluss angekoppelt wird, sobald das Kartuschensystem in die Getränkezubereitungsmaschine eingesetzt wird. Dies hat den Vorteil, dass eine Rückkontamination in Richtung der Getränkezubereitungsmaschine wirksam vermieden wird, weil die Kartuschenentladeeinrichtung sofort beim Einsetzen des Kartuschensystems unter Druck steht und somit verhindert wird, dass Getränkesubstanz in Richtung der Druckluftleitung und insbesondere in Richtung der Druckluftquelle der Getränkezubereitungsmaschine wandert. Die Getränkesubstanz kann sich ausgehend vom Reservoir somit lediglich in Richtung der Mischkammer bewegen.

Es kann vorgesehen werden, dass die Mischkammer einen Getränkeauslauf aufweist, durch welchen das aus einer Vermischung der Getränkesubstanz mit dem Fluid gebildete Getränk abgegeben wird, wobei das Kartuschensystem vorzugsweise derart ausgebildet ist, dass das Getränk aus dem Getränkeauslauf direkt in ein portables Gefäß einleitbar ist. In vorteilhafter Weise gerät somit weder die Getränkesubstanz noch das erzeugte Getränk in Kontakt mit einem Teil der Getränkezubereitungsmaschine, so dass nahezu jegliche (Rück-)Kontamination der Getränkezubereitungsmaschine verhindert wird. Das Fluid wird der Mischkammer separat zugeführt. Vorzugsweise wird das Fluid unter Druck in die Mischkammer eingeleitet. Das Fluid wird insbesondere von der Getränkezubereitungsmaschine bereitgestellt. Denkbar ist, dass eine Fluidquelle direkt an einen entsprechenden Fluidanschluss der Kartuschenaufnahme angekoppelt wird, sobald das Kartuschensystem in die Getränkezubereitungsmaschine eingesetzt wird. Der Fluidanschluss steht dabei über eine Fluidleitung in Fluidverbindung mit der Mischkammer. Dies hat den Vorteil, dass eine Rückkontamination in Richtung der Getränkezubereitungsmaschine wirksam vermieden wird, weil der Fluidanschluss sofort beim Einsetzen des Kartuschensystems unter Druck steht und somit verhindert wird, dass Getränkesubstanz in Richtung der Fluidleitung und insbesondere in Richtung der Fluidquelle der Getränkezubereitungsmaschine wandert. Die Getränkesubstanz und das Getränk kann sich ausgehend von der Mischkammer somit lediglich in Richtung des Getränkeauslasses bewegen. Das Fluid umfasst insbesondere Wasser, vorzugsweise unter Druck stehendes, gekühltes und/oder karbonisiertes Trinkwasser.

Es kann vorgesehen werden, dass die Mischkammer mit Mischstrukturen versehen ist. Die Mischstrukturen sorgen in vorteilhafter Weise für eine verbesserte Durchmischung von Getränkesubstanz und Fluid. Hierfür sind die Mischstrukturen insbesondere derart ausgebildet, dass das in die Mischkammer einströmende Fluid verwirbelt wird. Denkbar ist, dass die Mischstrukturen einen oder mehrere Mischstege umfasst, welche im Bereich der Fluidzuführung am Boden der Mischkammer angeordnet sind und sich im Wesentlichen senkrecht zum Einströmrichtung des Fluids erstrecken. Die Mischstege fungieren somit als Barrieren für das Fluid, wodurch das Fluid aufgewirbelt wird und eine bessere Durchmischung mit der Getränkesubstanz erzielt wird.

Es kann vorgesehen werden, dass die Fluidzuführung mit Fluid gespeist wird, welches durch ein Kühlaggregat gekühlt wird, wobei das Kühlaggregat Teil der Getränkezubereitungsmaschine oder eines mit der Getränkezubereitungsmaschine in Wirkverbindung stehenden separaten Kühlschranks ist. In vorteilhafter Weise sind somit Kaltgetränke herstellbar, auch wenn die Kartusche nicht gekühlt ist und beispielweise Zimmertemperatur aufweist. Die Integration des Systems in einen bestehenden Kühlschrank hat den Vorteil, dass das bestehende Kühlaggregat des Kühlschranks für die Getränkezubereitungsmaschine in effizienter Weise einfach mitgenutzt werden kann. Insbesondere bei sogenannten "Side-by-side"-Kühlschränken (oft auch als amerikanische Kühlschränke bezeichnet) findet sich in der Front ausreichend Bauraum zur Integration des Systems. Denkbar ist, dass es sich bei der Getränkezubereitungsmaschine um ein Nachrüstset für einen solchen Kühlschrank handelt. Das Kühlaggregat umfasst vorzugsweise eine Kompressorkühleinheit, eine Absorberkühleinheit oder einen thermoelektrischen Kühler.

Es kann vorgesehen werden, dass die Fluidzuführung mit Fluid gespeist wird, welches durch einen Karbonisierer mit Kohlensäure versetzt wird. Denkbar ist, dass der Karbonisierer Teil der Getränkezubereitungsmaschine ist und wobei der Karbonisierer eine Aufnahme für eine CO₂-Patrone und eine Zuführeinrichtung zum Versetzen des Fluides mit CO₂ aus der CO₂-Patrone aufweist.

Vorteilhafterweise lassen sich mit dem System somit auch mit Kohlensäure versetzte Erfrischungsgetränke herstellen. Alternativ wäre auch denkbar, dass der Karbonisierer einen externen CO₂-Anschluss aufweist.

Es kann vorgesehen werden, dass die Kartuschenaufnahme im Wesentlichen einteilig ausgebildet ist oder wobei die Kartuschenaufnahme ein Deckelelement und ein mit dem Deckelelement verbundenes Auslaufelement umfasst. Im Sinne der vorliegenden Erfindung bedeutet eine einteilige Ausführung der Kartuschenaufnahme insbesondere nicht, dass die Kartuschenaufnahme zwingend nur aus einem einzigen Teil bestehen soll, sondern lediglich, dass die Kartuschenaufnahme in dieser speziellen einteiligen Ausführungsform nicht aus dem Deckelelement und separaten Auslaufelement besteht. Mit anderen Worten: Deckelement und Auslaufelement sind in der einteiligen Ausführungsform einteilig ausgebildet.

Es kann vorgesehen werden, dass das Deckelelement mit der Kartusche derart reversibel verbindbar und insbesondere verrastbar ist, dass eine zum Reservoir führende Kartuschenöffnung durch das Deckelement zumindest temporär oder teilweise verschlossen ist, und wobei das Auslaufelement mit dem Deckelelement reversibel verbindbar und insbesondere verrastbar ist. Zur Herstellung dieser Ausführungsform des Kartuschensystems wird die Kartusche hergestellt, anschließend die Kartusche durch die Kartuschenöffnung mit der Getränkesubstanz gefüllt und anschließend zum Verschließen der Kartuschenöffnung die Kartuschenaufnahme auf die Kartusche geclipst. Das Auslaufelement weist in diesem Fall insbesondere die Fluidzuführung, den Druckluftanschluss, die Mischkammer und den Getränkeauslauf auf, während das Deckelelement den in das Reservoir insbesondere vorstehende Druckluftauslass zum Einleiten der Druckluft in das Reservoir aufweist. Denkbar ist, dass der Druckluftauslass einen hohlen Dorn umfasst, welcher über die Druckluftleitung in Wirkverbindung mit dem am Deckelelement oder am Auslaufelement ausgebildeten Druckluftanschluss steht.

Es kann vorgesehen werden, dass mittels einer Ventileinheit eine Fluidverbindung zwischen der Kartuschenöffnung und der Mischkammer herstellbar ist, wobei die Ventileinheit durch eine Relativbewegung zwischen dem Deckelelement und dem Auslaufelement von einem geschlossenen Zustand in einen geöffneten Zustand zur Herstellung der Fluidverbindung überführbar ist. In vorteilhafter Weise kann das Reservoir demnach geöffnet werden, so dass die Getränkesubstanz vom Reservoir in die Mischkammer mittels der Druckluft überführt werden kann, indem einfach die Relativbewegung zwischen Deckelelement und Auslaufelement durchgeführt wird.

Diese Relativbewegung kann vor oder nach dem Einsetzen des Kartuschensystems in die Getränkezubereitungsmaschine erfolgen.

Vorzugsweise weist das Deckelelement eine zur Kartuschenöffnung führende Durchgangsöffnung auf, wobei die Ventileileinheit durch die Durchgangsöffnung und einen in die Durchgangsöffnung vorstehenden Vorsprung des Auslaufelements gebildet ist, wobei durch eine Relativbewegung zwischen dem Deckelelement und dem Auslaufelement der Vorsprung aus einen die Durchgangsöffnung verschließende Position in eine die Durchgangsöffnung teilweise freigebende Position verschoben wird. Die Wandung der Durchgangsöffnung ist insbesondere mit wenigstens einem Seitenkanal versehen, wobei der Vorsprung in der die Durchgangsöffnung teilweise freigebenden Position im Bereich des wenigstens einen Seitenkanals angeordnet ist. Vorzugsweise sind eine Mehrzahl von parallel angeordneten Seitenkanälen in der Wandung der Durchgangsöffnung vorgesehen. Die Seitenkanäle verlaufen senkrecht zum Querschnitt der Durchgangsöffnung und erstrecken sich dabei aber jeweils nur über einen Teilbereich der Wandung. Der Vorsprung weist insbesondere einen äußeren umlaufenden Dichtungsrand auf, welcher in der verschließenden Position an der Innenwandung der Durchgangsöffnung anliegt und somit die Durchgangsöffnung verschließt. Durch die Relativbewegung wird der Vorsprung vorzugsweise linear in Richtung des Reservoirs oder vom Reservoir weg verschoben, so dass der äußere umlaufende Dichtungsrand in den Bereich der Seitenkanäle gelangt und seine Dichtwirkung verliert, da die Getränkesubstanz den Dichtungsrand durch die Seitenkanäle hindurch umfließen kann.

Denkbar ist, dass der Querschnitt der Seitenkanäle und/oder die Anzahl der Seitenkanäle an die Viskosität der Getränkesubstanz angepasst ist, so dass die Seitenkanäle den Fluss der Getränkesubstanz in Richtung Mischkammer kontrollieren bzw. begrenzen. Bei einer hohen Viskosität werden mehrere Seitenkanäle oder Seitenkanäle mit größerem Querschnitt verwendet, während bei einer niedrigeren Viskosität weniger Seitenkanäle oder Seitenkanäle mit geringerem Querschnitt vorgesehen sind. Daraus folgt, dass für verschiedene Typen von Getränkesubstanzen vorzugsweise unterschiedliche Deckelelemente (jeweils mit angepassten Seitenkanälen) Anwendung finden. Für jede Kartusche existiert somit ein passendes Deckelelement. Der Vorsprung ist insbesondere Ambossförmig ausgebildet, wobei der äußere umlaufende Dichtrand die Querschnittsvergrößerung gegenüber der Basis des Ambosses bildet.

Bei der vorstehend beschriebenen Ausführungsform sind Deckelelement und Auslaufelement als separate Teile ausgebildet, damit die Relativbewegung ausführbar ist. Die Relativbewegung umfasst hier insbesondere eine lineare Bewegung des Deckelelements und des Auslaufelements aufeinander zu oder eine lineare Bewegung des Deckelelements und des Auslaufelements voneinander weg, um den Vorsprung innerhalb der Durchgangsöffnung und relativ zu den Seitenkanälen zu bewegen.

Gemäß der vorliegenden Erfindung ist vorgesehen, dass die Kartusche eine mit dem Reservoir in Fluidverbindung stehende Kartuschenöffnung aufweist, wobei die Kartuschenöffnung mit einem Dichtelement verschlossen ist, wobei das Dichtelement insbesondere eine Dichtfolie umfasst, die auf den Rand der Kartuschenöffnung aufgebraucht und vorzugsweise aufgesiegelt ist. In dieser Ausführungsform ist die Kartuschenaufnahme insbesondere einteilig ausgebildet, d.h. es gibt lediglich keine separaten Auslauf- und Deckelelemente. Zur Herstellung dieses Kartuschensystems wird zunächst die Kartusche mit der Kartuschenöffnung erzeugt, dann die Kartusche durch die Kartuschenöffnung mit der Getränkesubstanz befüllt, anschließend die Kartuschenöffnung durch das Dichtelement verschlossen und zuletzt die Kartuschenaufnahme auf die Kartusche im Bereich der verschlossenen Kartuschenöffnung aufgeclipst. Vor, während oder nach dem Einsetzen des Kartuschensystems in die Getränkezubereitungsmaschine muss das Dichtelement im Bereich der Kartuschenöffnung geöffnet werden, beispielsweise durch Perforieren der Dichtfolie, damit die Getränkesubstanz durch Einleiten der Druckluft vom Reservoir in die Mischkammer überführt werden kann. Nicht erfindungsgemäß weist die Kartuschenaufnahme hierfür einen in Richtung der Kartusche vorstehenden Aufstechdorn derart auf, dass durch eine Relativbewegung zwischen Kartuschenaufnahme und Kartusche der Aufstechdorn das Dichtelement durchsticht und eine Fluidverbindung zwischen dem Reservoir und der Mischkammer erzeugt wird. Denkbar ist, dass die Kartusche zunächst in einer Vorposition innerhalb der Kartuschenaufnahme sitzt, in welcher der Aufstechdorn von dem Dichtelement beabstandet ist, und nach dem Einbringen des Kartuschensystems in die Getränkezubereitungsmaschine von der Vorposition in eine Endposition überführt wird, in welcher der Aufstechdorn das Dichtelement durchstößt. Beim Überführen des Kartuschensystems von der Vorposition in die Endposition werden die Kartusche und die Kartuschenaufnahme insbesondere translatorisch weiter aufeinander zu bewegt, wobei das Dichtelement bei dieser Bewegung aktiv vom Aufstechdorn durchstochen wird. Anschließend ragt der Aufstechdorn durch das Dichtelement in Richtung der Kartuschenöffnung. Vorzugsweise ist in die Wandung des Aufstechdorns wenigstens einen Seitenkanal zum Leiten der Getränkesubstanz in Richtung der Mischkammer, wenn das Dichtelement durchstochen ist, eingebracht. Durch den seitlich am Aufstechdorn ausgebildeten Seitenkanal kann die Getränkesubstanz dann an dem Dichtelement vorbei in Richtung Mischkammer fließen. Vorzugsweise sind eine Mehrzahl von Seitenkanälen am Aufstechdorn ausgebildet. Die Seitenkanäle sind insbesondere jeweils in Form einer einseitig offenen Nut ausgebildet.

Denkbar ist, dass der Querschnitt der Seitenkanäle und/oder die Anzahl der Seitenkanäle an die Viskosität der Getränkesubstanz angepasst ist, so dass die Seitenkanäle den Fluss der Getränkesubstanz in Richtung Mischkammer kontrollieren bzw. begrenzen. Bei einer hohen Viskosität werden mehrere Seitenkanäle oder Seitenkanäle mit größerem Querschnitt verwendet, während bei einer niedrigeren Viskosität weniger Seitenkanäle oder Seitenkanäle mit geringerem Querschnitt vorgesehen sind. Für jede Kartusche existiert somit eine passende Kartuschenaufnahme.

Vorzugsweise weist der Aufstechdorn eine Durchgangsbohrung auf, in welcher eine Druckluftspitze zwischen einer eingefahrenen Position, in welcher die Druckluftspitze in Richtung des Reservoirs nicht über den Aufstechdorn hinausragt, und einer ausgefahrenen Position, in welcher die Druckluftspitze über den Aufstechdorn bis in das Reservoir ragt, verschiebbar gelagert ist. Vorzugsweise wird die Druckluftspitze von der eingefahrenen Position in Richtung der ausgefahrenen Position überführt, nachdem das Dichtelement von dem Aufstechdorn perforiert wurde. Mit Hilfe der Druckluftspitze wird sodann Druckluft in das Reservoir eingeführt, so dass die Getränkesubstanz durch die Nuten in die Mischkammer gedrückt wird und innerhalb der Mischkammer mit dem Fluid das Getränk bildet. Vorzugsweise ist hierfür in die Druckluftspitze die Druckluftleitung integriert ist. An einer dem Reservoir insbesondere abgewandten Seite der Druckluftspitze ist der Druckluftanschluss ausgebildet, wobei der Druckluftanschluss vorzugsweise von außerhalb der Kartuschenaufnahme zugänglich ist und somit an die Druckluftquelle der Getränkezubereitungsmaschine angeschlossen werden kann. Denkbar ist, dass die Druckluftspitze beim Einsetzen des Kartuschensystems in die Getränkezubereitungsmaschine von einem Auslöseelement der Getränkezubereitungsmaschine von der eingefahrenen Position in die ausgefahrene Position überführt wird. Vorzugsweise wird dabei bereits Druckluft an die Druckluftspitze angelegt, um eine etwaige Rückkontamination zu verhindern. Alternativ wird die Druckluftspitze durch die über die Getränkezubereitungsmaschine angelegte Druckluft von der eingefahrenen Position in die ausgefahrene Position verfahren.

Erfindungsgemäß ist der Aufstechdorn nicht fest bzw. einteilig an der Kartuschenaufnahme ausgebildet, sondern die Kartuschenaufnahme umfasst stattdessen eine Dornführung und einen innerhalb der Dornführung verschiebbar gelagerten Aufstechdorn. Der Aufstechdorn ist zwischen einer eingefahrenen Position, in welcher der Aufstechdorn von dem Dichtelement beabstandet ist, und einer ausgefahrenen Position, in welcher der Aufstechdorn das Dichtelement durchsticht und bis in das Reservoir ragt, gegenüber der Dornführung verschiebbar gelagert. Die Außenwandung des Aufstechdorns ist wiederum mit wenigstens einem Seitenkanal zum Leiten der Getränkesubstanz in Richtung der Mischkammer, wenn das Dichtelement durchstochen ist, versehen. Durch den seitlich am Aufstechdorn ausgebildeten Seitenkanal kann die Getränkesubstanz dann an dem Dichtelement vorbei in Richtung Mischkammer fließen. Vorzugsweise sind eine Mehrzahl von Seitenkanälen am Aufstechdorn ausgebildet. Die Seitenkanäle sind insbesondere jeweils in Form einer einseitig offenen Nut ausgebildet.

Denkbar ist auch bei dieser Ausführung, dass der Querschnitt der Seitenkanäle und/oder die Anzahl der Seitenkanäle an die Viskosität der Getränkesubstanz angepasst ist, so dass die Seitenkanäle den Fluss der Getränkesubstanz in Richtung Mischkammer kontrollieren bzw. begrenzen. Bei einer hohen Viskosität werden mehrere Seitenkanäle oder Seitenkanäle mit größerem Querschnitt verwendet, während bei einer niedrigeren Viskosität weniger Seitenkanäle oder Seitenkanäle mit geringerem Querschnitt vorgesehen sind. Für jede Kartusche existiert somit eine passende Kartuschenaufnahme.

Erfindungsgemäß ist in den Aufstechdorn die Druckluftleitung integriert. Der Aufstechdorn weist allerdings keine bewegliche Druckluftspitze auf, sondern die Druckluftleitung mündet durch eine feststehende Druckluftspitze am Ende des Aufstechdorns in die Kartuschenöffnung. An einer dem Reservoir insbesondere abgewandten Seite des Aufstechdorns ist der Druckluftanschluss ausgebildet ist, wobei der Druckluftanschluss vorzugsweise von außerhalb der Kartuschenaufnahme zugänglich ist. Vorzugsweise wird der Aufstechdorn beim Einsetzen des Kartuschensystems in die Getränkezubereitungsmaschine von einem Auslöseelement der Getränkezubereitungsmaschine von der eingefahrenen Position in die ausgefahrene Position überführt wird. Vorzugsweise wird dabei bereits Druckluft an die Druckluftspitze angelegt, um eine etwaige Rückkontamination der Getränkezubereitungsmaschine zu verhindern. Alternativ wird die Druckluftspitze durch die über die Getränkezubereitungsmaschine angelegte Druckluft von der eingefahrenen Position in die ausgefahrene Position verfahren.

Es kann vorgesehen werden, dass die Kartusche auf einer der Kartuschenöffnung gegenüberliegenden Seite eine weitere Kartuschenöffnung aufweist, welche durch ein weiteres Dichtelement, insbesondere eine weitere Dichtfolie, verschlossen ist. In vorteilhafter Weise kann die Kartusche somit auch in einem günstigen Spritzformverfahren hergestellt werden.

Es kann vorgesehen werden, dass die Kartusche und/oder die Kartuschenaufnahme eine Produktidentifikationskennung aufweist und die Getränkezubereitungsmaschine oder die Kartuschenaufnahme einen Kennungsdetektor zum Identifizieren der Produktidentifikationskennung aufweist. Vorzugsweise ist die Produktidentifikationskennung in einen Barcode, einen RFID-Code, einen QR-Code, einen Data-Matrix-Code, einen Farbcode, einen Hologrammcode oder dergleichen eingebettet. In vorteilhafter Weise wird somit ein automatisches Auslesen der Produktidentifikationskennung möglich. Der Kennungsdetektor umfasst insbesondere einen optischen Sensor, wie beispielsweise eine CCD-Kamera, welche den Barcode oder QR-Code oder Data-Matrix-Code automatisch ausliest, wenn die Kartusche in die Getränkezubereitungsmaschine eingesetzt ist. Alternativ umfasst der Kennungsdetektor eine Sende- und Empfangsantenne zum automatischen Auslesen der RFID-Codes. Alternativ wäre denkbar, dass die Produktidentifikationskennung auch in andere automatisch auslesbare Computerchips eingebettet wird. Der Begriff QR-Code umfasst im Sinne der vorliegenden Erfindung insbesondere jedweden Data-Matrix-Code. Insofern werden die Begriff QR-Code und Data-Matrix-Code synonym verwendet. Alternativ oder zusätzlich wäre auch denkbar, dass die Produktidentifikationskennung einen Strichcode, einen Punktcode, einen Binärcode, einen Morsecode, Braillezeichencode (Blindenschrift) oder dergleichen umfasst. Der Code kann dabei auch in eine dreidimensionale Struktur, wie beispielweise ein Relief eingebettet sein. Die Produktidentifikationskennung umfasst insbesondere die sogenannte Produktidentifikationsnummer, insbesondere einen Universal Product Code (UPC), eine European Article Number (EAN), einen GS1-Code, eine Global Trade Item Number (GTIN) oder dergleichen. Auf diese Weise braucht hierfür kein neues Codesystem eingeführt werden. Insbesondere läuft die Produktidentifikationskennung unter dem GS1-Standard.

Die Produktidentifikationskennung dient insbesondere dazu, die in der Kartusche befindliche Getränkesubstanz anzugeben. Während oder vor dem Start des Getränkezubereitungsprozesses wird die Produktidentifikationskennung mit dem Kennungsdetektor ausgelesen. Auf Seiten der Getränkezubereitungsmaschine ist somit bekannt, welche Art von Kartusche in die Getränkezubereitungsmaschine eingelegt ist. Denkbar ist, dass eine Auswerte- und Steuereinheit der Getränkezubereitungsmaschine eine Vielzahl von vorgespeicherten Getränkeherstellungsprogrammen aufweist, welche zur Zubereitung unterschiedlicher Getränke vorgesehen sind und sich beispielsweise in der Fördermenge, Förderzeit, Förderpausen, Temperatur, Karbonisierungsgrad und/oder Druck des zugeführten Fluids voneinander unterscheiden. Denkbar ist auch, dass bei verschiedenen Getränkeherstellungsprogrammen unterschiedliche Druckluftzufuhren Verwendung finden (bspw. anderer Druck). Jedes Getränkeherstellungsprogramm ist mit einem oder mehreren Produktidentifikationskennungen verknüpft. Wenn eine Kartusche in die Getränkezubereitungsmaschine eingelegt wird, wird die Produktidentifikationskennung auf der Kartusche mit dem Kennungsdetektor ausgelesen und anschließend mit den vorgespeicherten Daten verglichen. Anhand der Produktidentifikationskennung wird somit ein Getränkeherstellungsprogramm aus der Mehrzahl von vorgespeicherten Getränkeherstellungsprogrammen ausgewählt und anschließend der Getränkeherstellungsprozess mit dem ausgewählten Getränkeherstellungsprogramm gestartet. Die Parameter wie Fördermenge, Förderzeit, Förderpausen, Temperatur, Karbonisierungsgrad und/oder Druck des zugeführten Fluids werden durch das ausgewählte Getränkeherstellungsprogramm vorgegeben bzw. gesteuert, um für das mit der jeweiligen Getränkesubstanz herzustellende Getränk optimale Ergebnisse zu erzielen.

Denkbar ist, dass der Getränkeherstellungsprozess gar nicht erst startet, wenn keine Produktidentifikationskennung identifizierbar ist oder die identifizierte Produktidentifikationskennung zu keinem vorgespeicherten Getränkeherstellungsprogramm passt. Auf diese Weise wird verhindert, dass eine systemfremde Kartusche in der Getränkeherstellungsmaschine verwendet wird, welche für den Betrieb in der Getränkeherstellungsmaschine nicht zertifiziert ist und somit die Gefahr einer Beschädigung der Getränkeherstellungsmaschine oder einer Gefährdung des Benutzers, beispielsweise durch ein Aufplatzen der Kartusche (wenn diese für den Betrieb bei geringeren Drücken vorgesehen ist), bestünde.

Die Produktidentifikationskennung ist vorzugsweise auf die Wandung der Kartusche oder auf das Dichtelement (insbesondere die Dichtfolie) zum Abdichten der Kartuschenöffnung aufgedruckt oder aufgeklebt. Insbesondere ist die Produktidentifikationskennung derart auf der Kartusche positioniert, dass die Produktidentifikationskennung innerhalb des Detektionsbereichs des Kennungsdetektors der Getränkezubereitungsmaschine angeordnet ist, wenn die Kartusche in die Getränkezubereitungsmaschine eingesetzt ist. Alternativ wäre auch denkbar, dass die Produktidentifikationskennung nicht auf der Kartusche, sondern auf einer Außenwandung der Kartuschenaufnahme entsprechend angeordnet ist.

Ein weiterer Gegenstand der vorliegenden Erfindung zur Lösung der eingangs gestellten Aufgabe ist eine Getränkezubereitungsmaschine, in welche das erfindungsgemäße Kartuschensystem eingesetzt wird, wobei die Getränkezubereitungsmaschine eine Halteeinheit aufweist, in welche die mit der Kartusche verbundene Kartuschenaufnahme einsetzbar ist, eine Fluidquelle zum Einspeisen des Fluid in die Fluidzuführung und eine Druckluftquelle zum Einblasen von Druckluft in den Druckluftanschluss. Vorzugsweise weist die Getränkezubereitungsmaschine das Auslöseelement zum Überführen der Druckluftspitze oder des Aufstechdorns von der eingefahrenen Position in die ausgefahrene Position auf.

Vorzugsweise weist die Getränkezubereitungsmaschine die Auswerte- und Steuereinheit auf, welche mit dem Kennungsdetektor gekoppelt ist und zum Bestimmen der Produktidentifikationskennung durch Analyse des detektierten QR-Codes vorgesehen ist. Vorzugsweise ermittelt die Auswerteelektronik aus dem QR-Code den GS1-Code, welcher eine eindeutige Identifizierung der in der Getränkezubereitungsmaschine angeordneten Kartusche erlaubt. Die Getränkezubereitungsmaschine weist vorzugsweise ferner eine Vergleichseinheit auf, welche zum Vergleichen der bestimmten Produktidentifikationskennung mit einer Liste von vorgespeicherten Produktidentifikationskennungen vorgesehen ist und anhand des Vergleichs ein Getränkeherstellungsprogramm auswählt. Alternativ ist denkbar, dass die Getränkezubereitungsmaschine eine Algorithmus-Erkennung aufweist, welche anhand eines Algorithmus erkennt, ob der detektierte QR-Code systemzugehörig (also bekannt) oder systemfremd ist. Der Algorithmus funktioniert dabei nach den bekannten kryptographischen Ver-/Entschlüsselungsverfahren.

Ein weiterer Gegenstand der vorliegenden Erfindung zur Lösung der eingangs gestellten Aufgabe ist ein Verfahren zur Herstellung eines Getränks mit dem erfindungsgemäßen Kartuschensystem aufweisend die folgenden Schritte: Einsetzen des Kartuschensystems in eine Halteeinheit einer Getränkezubereitungsmaschine; Überführen der Getränkesubstanz aus dem Reservoir der Kartusche in die Mischkammer der Kartuschenaufnahme mittels der Kartuschenentladeeinrichtung; Einspeisen eines Fluides in die Mischkammer mittels der Fluidzuführung; und Ableiten des in der Mischkammer durch Vermischung der Getränkesubstanz mit dem Fluid erzeugten Getränks mittels eines Getränkeauslaufs.

Vorzugsweise wird das Fluid vor dem Einspeisen in die Mischkammer gekühlt und/oder karbonisiert wird, so dass Kaltgetränke und kohlensäurehaltige Softdrinks herstellbar sind.

Es kann vorgesehen werden, dass vor, beim oder nach dem Einsetzen des Kartuschensystems in die Halteeinheit eine Druckluftspitze oder des Aufstechdorns von einer eingefahrenen Position in eine ausgefahrene Position überführt wird und ein Dichtelement an der Kartuschenöffnung perforiert. In vorteilhafter Weise wird das Reservoir somit automatisch geöffnet, so dass ein Überführen der Getränkesubstanz in die Mischkammer erfolgen kann. Vorzugsweise wird während des Öffnungsvorgangs bereits Druckluft und Fluid in die Kartuschenaufnahme eingeleitet, so dass eine Rückkontamination der Getränkezubereitungsmaschine durch Getränkesubstanz verhindert wird. Die Überführung der Druckluftspitze und/oder des Aufstechdorns erfolgt insbesondere durch einen angetriebenen Aktuator oder durch Druckluft.

Es kann vorgesehen werden, dass vor, beim oder nach dem Einsetzen des Kartuschensystems in die Halteeinheit eine Fluidverbindung zwischen dem Reservoir und der Mischkammer durch Öffnen einer Ventileinheit hervorgerufen durch eine Relativbewegung zwischen einem Deckelelement und einem Auslaufelement herbeigeführt wird. In vorteilhafter Weise wird das Reservoir somit automatisch geöffnet, so dass ein Überführen der Getränkesubstanz in die Mischkammer erfolgen kann. Vorzugsweise wird während des Ventilöffnungsvorgangs bereits Druckluft und Fluid in die Kartuschenaufnahme eingeleitet, so dass eine Rückkontamination der Getränkezubereitungsmaschine durch Getränkesubstanz verhindert wird. Die Relativbewegung wird insbesondere durch einen angetriebenen Aktuator oder durch Druckluft herbeigeführt.

Weitere Einzelheiten, Merkmale und Vorteile der Erfindung ergeben sich aus den Zeichnungen, sowie aus der nachfolgenden Beschreibung von bevorzugten Ausführungsformen anhand der Zeichnungen. Die Zeichnungen illustrieren dabei lediglich beispielhafte Ausführungsformen der Erfindung, welche den wesentlichen Erfindungsgedanken nicht einschränken.

### Kurze Beschreibung der Zeichnungen

- Figur 1: zeigt das Grundprinzip des Verfahrens zur Herstellung eines Getränks mit einer Kartuschenaufnahme und einem Kartuschensystem eingesetzt in eine Getränkezubereitungsmaschine gemäß einer beispielhaften Ausführungsform der vorliegenden Erfindung.
- Figuren 2a bis 2h: zeigen schematische Ansichten einer Kartuschenaufnahme und eines Kartuschensystems gemäß einer ersten Ausführungsform der vorliegenden Erfindung.
- Figuren 3a bis 3g: zeigen schematische Ansichten einer Kartuschenaufnahme und eines Kartuschensystems gemäß einer zweiten Ausführungsform der vorliegenden Erfindung.
- Figuren 4a bis 4c: zeigen schematische Ansichten einer Kartuschenaufnahme und eines Kartuschensystems gemäß einer dritten Ausführungsform der vorliegenden Erfindung.
- Figuren 5a und 5b: zeigen schematische Ansichten einer Kartuschenaufnahme und eines Kartuschensystems eingesetzt in eine Halteeinheit einer Getränkezubereitungsmaschine gemäß einer dritten Ausführungsform der vorliegenden Erfindung.

### Ausführungsformen der Erfindung

In den verschiedenen Figuren sind gleiche Teile stets mit den gleichen Bezugszeichen versehen und werden daher in der Regel auch jeweils nur einmal benannt bzw. erwähnt.

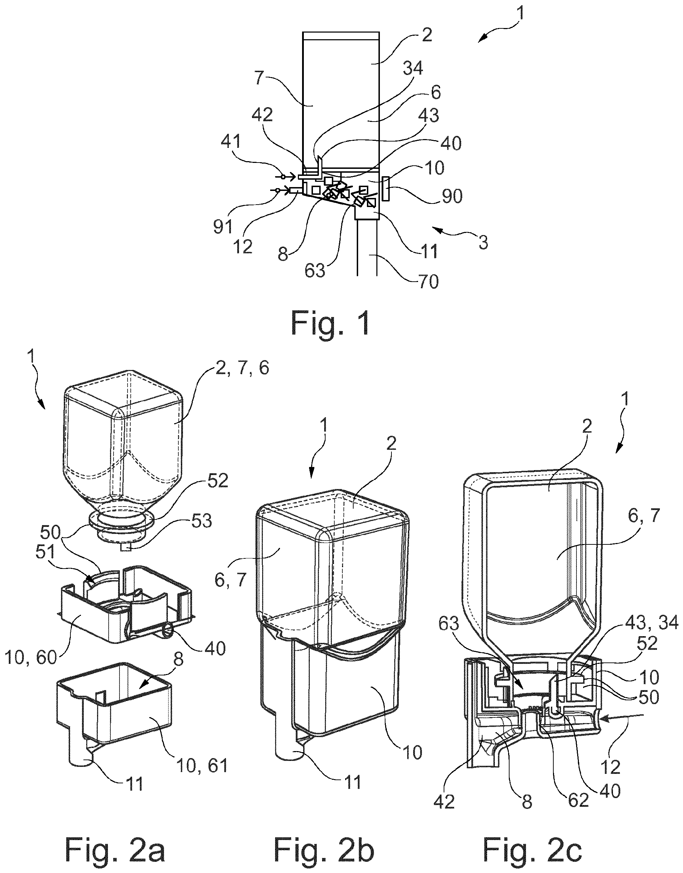

In **Figur** 1 ist eine schematische Schnittbildansicht eines erfindungsgemäßen Kartuschensystems 1, welche in eine Getränkezubereitungsmaschine 3 eingesetzt ist und mittels welcher ein Getränk 70 zubereitet wird, gezeigt, um das allgemeine Funktionsprinzip zu illustrieren.

Das vorliegende System umfasst die Getränkezubereitungsmaschine 3 (nur schematisch illustriert), in welche austauschbare Kartuschensysteme 1 einsetzbar sind. Jedes Kartuschensystem 2 weist eine Kartusche 2, die mit einer bestimmten Getränkesubstanz 7 gefüllt sind. Innerhalb der Getränkezubereitungsmaschine 3 wird mit Hilfe der Getränkesubstanz 7 und einer zusätzlichen Wasserquelle, im Folgenden als Fluidquelle 41 bezeichnet, ein entsprechendes Getränk 70 erzeugt. Die Kartusche 2 ist dabei vorzugsweise mit einer vorportionierten Menge an Getränkesubstanz 7, die zur Erzeugung einer gezielten Trinkportion, beispielsweise eine Trinkglasfüllung des gewünschten Getränks 70, notwendig ist, befüllt. Es stehen insbesondere eine Mehrzahl unterschiedlicher Kartuschensysteme 1 zur Verfügung, deren Kartuschen 2 bzw. Reservoirs 6 zur Erzeugung verschiedener Getränke 70 mit unterschiedlichen Getränkesubstanzen 7 befüllt sind. Wenn der Anwender des Systems 1 ein bestimmtes Getränk 70 trinken möchte, braucht er lediglich aus der Mehrzahl der unterschiedlichen Kartuschensysteme 1 dasjenige Kartuschensystem 1, welche die entsprechende Getränkesubstanz 7 zur Erzeugung des gewünschten Getränks 70 enthält, auswählen, in eine Halteeinheit 90 der Getränkezubereitungsmaschine 3 einsetzen und den Getränkeherstellungsprozess an der Getränkezubereitungsmaschine 3 ggf. starten, beispielsweise durch Drücken eines Startknopfs, entsprechendes Berühren eines berührungssensitiven Displays, durch Gestik- oder Sprachsteuerung oder mittels einer geeigneten Applikation auf einem Mobiltelefon. Denkbar ist auch, dass der Getränkeherstellungsprozess automatisch startet, wenn das Einlegen eines neuen Kartuschensystems 1 in die Halteeinheit 90 erkannt wird. In jedem der vorgenannten Fälle wird das gewünschte Getränk 70 sodann automatisch erzeugt, in ein Trinkgefäß geleitet und dem Anwender somit bereitgestellt. Anschließend wird das verbrauchte Kartuschensystem 1 entfernt und entsorgt. Die Getränkezubereitungsmaschine 3 ist nun wieder bereit, mit einem beliebigen neuen Kartuschensystem 1 befüllt zu werden, um ein weiteres Getränk 70 zu erzeugen.

Die Getränkesubstanz 7 umfasst vorzugsweise flüssige Pre-Mix-Bestandteile für Erfrischungsgetränke, wie koffein-, kohlensäure-, frucht- und/oder zuckerhaltige Limonaden und Säfte, Bier(misch)getränke oder sonstige alkoholische oder nicht alkoholische (Misch-)Getränke.

Das Kartuschensystem 1 umfasst eine Kartusche 2 in Form eines zylinderförmigen Behälters mit abgerundeten Ecken. Der Behälter ist hohl und beinhaltet somit ein Reservoir 6 für die Getränkesubstanz 7. Die Kartusche 2 ist insbesondere aus Kunststoff gefertigt und durch ein Blas-Spritform-Verfahren hergestellt. Die Kartusche 2 weist ferner eine Kartuschenöffnung 63 auf, durch welche das Reservoir 6 mit der flüssigen Getränkesubstanz 7 befüllt wird. Der Boden des Reservoirs 6 ist im vorliegenden Beispiel trichterförmig ausgebildet, wobei im Zentrum des trichterförmigen Bodens die Kartuschenöffnung 63 angeordnet ist. Die Kartusche 2 ist mit einer erfindungsgemäßen Kartuschenaufnahme 10 reversibel verbunden, welche nach dem Befüllen der Kartusche 2 im Bereich der Kartuschenöffnung 63 auf die Kartusche 2 mittels einer Rastverbindung 50 verbunden ist. Die Kartuschenaufnahme 10 weist hierfür seitliche Rastelemente 51 in Form von elastischen Halteärmchen auf, welche einen im Bereich der Kartuschenöffnung 63 angeordneten umlaufenden Halteflansch 52 der Kartusche 2 umgreifen. Die Kartuschenaufnahme 10 wird nach dem Befüllen der Kartusche 2 auf die Kartusche 2 geclipst.

Die Kartuschenaufnahme 10 weist eine Mischkammer 8 auf, welche während des Getränkeherstellungsprozesses in Fluidverbindung mit dem Reservoir 6 steht, so dass mit Hilfe einer Kartuschenentladeeinrichtung 34 der Kartuschenaufnahme 10 die Getränkesubstanz 7 zumindest teilweise aus dem Reservoir 6 in die Mischkammer 8 überführt werden kann. Die Kartuschenentladeeinrichtung 34 umfasst zu diesem Zweck eine Druckluftleitung 40. Ein Ende der Druckluftleitung 40 ist mit einem Druckluftanschluss 42 verbunden, der mit einer Druckluftquelle 41 der Getränkezubereitungsmaschine 3 verbunden werden kann, um Druckluft in die Druckluftleitung 40 einzuleiten, während das andere Ende in einen Druckluftauslass 43 mündet, der in Richtung des Reservoirs 6 geöffnet ist und Druckluft in das Reservoir 6 einleitet. Das Einleiten der Druckluft bewirkt, dass die Getränkesubstanz 7 in die Mischkammer 8 gedrückt wird.

In die Mischkammer 8 mündet ferner eine Fluidzuführung 12 der Kartuschenaufnahme 10, welche durch eine Fluidquelle 91 Getränkezubereitungsmaschine 3 gespeist wird. Denkbar ist, dass die Fluidzuführung 12 eine Schnellkupplung aufweist, mit welcher die Fluidzuführung 12 an die Fluidquelle 91 der Getränkezubereitungsmaschine 3 angeschlossen werden kann. Die Schnellkupplung kann beispielsweise derart ausgebildet sein, dass beim Einsetzen des Kartuschensystems 1 in die Halteeinheit 90 automatisch eine Fluidverbindung zwischen der Fluidquelle 91 und der Mischkammer 8 über die Fluidzuführung 12 hergestellt wird. Während des Getränkeherstellungsprozesses gelangt über diese Fluidverbindung Fluid, insbesondere gekühltes und karbonisiertes Trinkwasser, von der Fluidzuführung 12 in die Mischkammer 8. Ferner gelangt während des Getränkeherstellungsprozesses Getränkesubstanz 7 von dem Reservoir 6 in die Mischkammer 8, wie vorstehend beschrieben. Durch Vermischung der Getränkesubstanz 7 mit dem Fluid in der Mischkammer 8 bildet sich das Getränk 70, welches die Mischkammer 8 sodann durch einen Getränkeauslauf 11 verlässt.

Die Kartuschenaufnahme 10 weist den Getränkeauslauf 11 auf, durch welchen das innerhalb der Mischkammer 8 erzeugte Getränk 70 die Mischkammer 8 verlässt und insbesondere direkt in das Trinkgefäß (nicht abgebildet) geleitet wird, d.h. ohne dass Teile der Getränkezubereitungsmaschine 3 in Kontakt mit dem Getränk 70 gelangen. Auf diese Weise wird Rücckontamination der Getränkezubereitungsmaschine 3 verhindert. Das Trinkgefäß wird insbesondere direkt unterhalb des Getränkeauslaufs 11 angeordnet.

Nach Beendigung des Getränkeherstellungsprozesses wird das Kartuschensystem 1 aus der Halteeinheit 90 entnommen, so dass die Getränkeherstellungsmaschine 3 mit einem neuen und unverbrauchten Kartuschensystem 1 bestückt werden kann. Die Kartuschenaufnahme 10 kann wiederverwendet werden, indem es von der benutzten Kartusche 2 durch Lösen der Rastverbindung 50 abgetrennt und auf eine neue Kartusche 2 geclipst wird.

Im Nachfolgenden werden drei verschiedene Ausführungsformen des Kartuschensystems 1 beschrieben. Die drei verschiedenen Ausführungsformen unterscheiden sich insbesondere darin, dass die Kartuschenaufnahme 10 unterschiedlich ausgebildet ist und der Mechanismus zur Herstellung der Fluidverbindung zwischen dem Reservoir 6 und der Mischkammer 8 unterschiedlich ausgestaltet ist, ansonsten entsprechen alle drei Ausführungsformen im Wesentlichen dem vorstehend anhand von Figur 1 illustrierten Kartuschensystem 1.

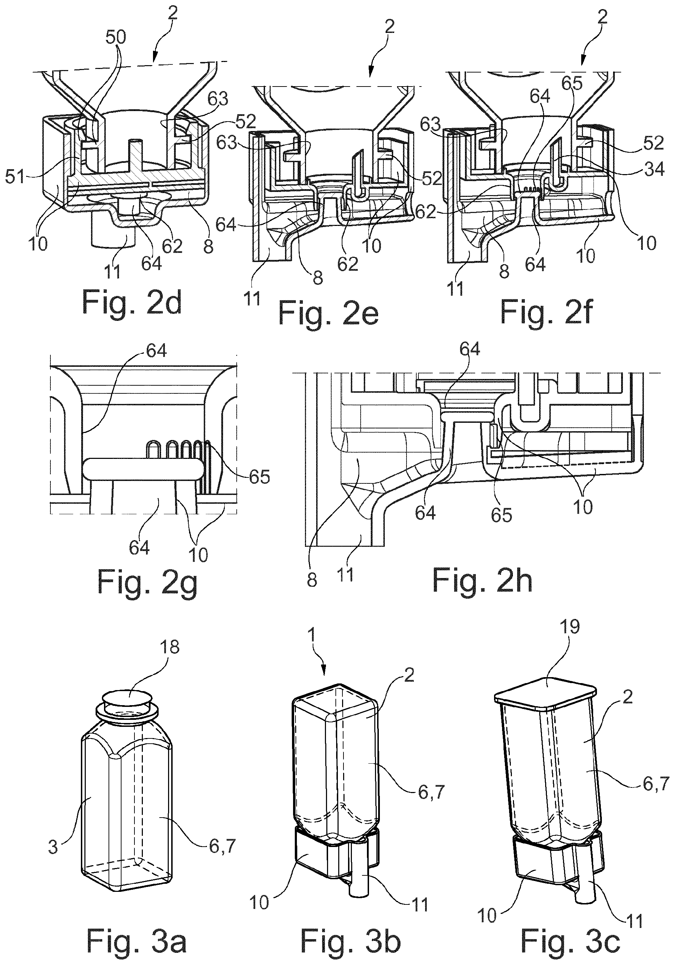

In **Figuren 2a bis 2h** sind schematische Ansichten einer Kartuschenaufnahme 10 und eines Kartuschensystems 1 gemäß einer ersten Ausführungsform der vorliegenden Erfindung illustriert.

In dieser ersten Ausführungsform umfasst die Kartuschenaufnahme 10 ein Deckelelement 60 und ein separates Auslaufelement 61. Das Deckelelement 60 wird direkt auf die Kartusche 2 mittels der bereits erläuterten lösbaren Rastverbindung 50 geclipst. Auf das Deckelelement 60 wird ferner das Auslaufelement 61 geclipst, ebenfalls mit einer lösbaren Rastverbindung. Die Mischkammer 8 und der Getränkeauslauf 11 sind in das Auslaufelement 61 integriert. Zwischen dem Deckelelement 60 und dem Auslaufelement 61 ist eine Ventileinheit ausgebildet, welche die Kartuschenöffnung 63 verschließt und erst während des Getränkeherstellungsprozesses öffnet, um eine Überführung der Getränkesubstanz 7 in die Mischkammer 8 zu ermöglichen. Während des Getränkeherstellungsprozesses fungiert die Ventileinheit zudem als Flusskontrolle, welche den Fluss von Getränkesubstanz 7 in die Mischkammer 8 begrenzt bzw. steuert.

Zur Ausbildung der Ventileinheit umfasst das Deckelelement 60 eine zentrale Durchgangsöffnung 62, welche im Bereich der offenen Kartuschenöffnung 63 angeordnet ist und somit in direkter Fluidverbindung mit dem Reservoir 6 steht. Das Auslaufelement 61 weist einen Vorsprung 64 auf, welcher in die Durchgangsöffnung 62 vorsteht. Der Vorsprung 64 ist ambossförmig ausgebildet und umfasst eine äußeren umlaufenden Dichtrand, welcher einer Querschnittsvergrößerung gegenüber der Basis des Ambosses bildet. Durch eine Relativbewegung zwischen dem Deckelelement 60 und dem Auslaufelement 61 wird der Vorsprung 64 aus einen die Durchgangsöffnung 62 verschließende Position in eine die Durchgangsöffnung 62 teilweise freigebende Position verschoben. In der verschließenden Position liegt der Dichtrand an der Innenwandung der Durchgangsöffnung 62 bündig an, so dass die Durchgangsöffnung 63 für Getränkesubstanz 7 verschlossen ist. Durch die Relativbewegung wird im vorliegenden Beispiel der Vorsprung 63 linear vom Reservoir 6 weg und in Richtung der Mischkammer 8 verschoben, so dass der äußere umlaufende Dichtungsrand in einen Bereich der Durchgangsöffnung 63 gelangt, der mit einer Mehrzahl von parallelen Seitenkanälen 82 versehen ist. Die Dichtwirkung des Dichtungsrandes wird somit aufgehoben, da die Getränkesubstanz 7 den Dichtungsrand nun durch die Seitenkanäle 82 hindurch in Richtung der Mischkammer 8 umfließen kann. Die Seitenkanäle 82 erstrecken sich in der Wandung der Durchgangsöffnung 63 in linearer Richtung und umfassen jeweils eine einseitig offene Nut. Die Seitenkanäle 82 verlaufen demnach senkrecht zum Querschnitt der Durchgangsöffnung 63 und erstrecken sich dabei aber jeweils nur über einen Teilbereich der Wandung, damit die die Durchgangsöffnung 62 verschließende Position und die die Durchgangsöffnung 62 teilweise freigebende Position realisiert wird.

Der Querschnitt der Seitenkanäle 82 und/oder die Anzahl der Seitenkanäle 82 ist vorzugsweise an die Viskosität der Getränkesubstanz 7 angepasst ist, so dass die Seitenkanäle 82 den Fluss der Getränkesubstanz 7 in Richtung Mischkammer 8 kontrollieren bzw. begrenzen. Bei einer hohen Viskosität werden mehrere Seitenkanäle 82 und/oder Seitenkanäle 82 mit größerem Querschnitt verwendet, während bei einer niedrigeren Viskosität weniger Seitenkanäle 82 und/oder Seitenkanäle 82 mit geringerem Querschnitt vorgesehen sind.

Die Relativbewegung zwischen Deckelelement 60 und Auslaufelement 61 wird entweder manuelle vor dem Einsetzen des Kartuschensystems 1 in die Getränkezubereitungsmaschine 3 durchgeführt oder automatisch während oder nach dem Einsetzen des Kartuschensystems 1 in die Getränkezubereitungsmaschine 3.

Damit der Getränkeherstellungsprozess zügig abläuft wird das Überführen der Getränkesubstanz 7 von dem Reservoir 6 in die Mischkammer 8 durch die Kartuschenentladeeinrichtung 34 unterstützt. Die Kartuschenentladeeinrichtung 34 umfasst im vorliegenden Beispiel einen Druckluftauslass 43, welcher in Form eines in die Kartuschenöffnung 63 vorstehenden hohlen Dorns ausgebildet ist. Durch diesen Dorn wird Druckluft in das Reservoir 6 geblasen, welche das Austreten der Getränkesubstanz 7 durch die Seitenkanäle 82 zur Mischkammer 8 hervorruft bzw. beschleunigt. Die Druckluft wird von der Getränkezubereitungsmaschine 3 bereitgestellt und über einen Druckluftanschluss 42 in die Kartuschenaufnahme 10 eingeleitet und mittels einer Druckluftleitung 40 an den hohlen Dorn geleitet. Der hohle Dorn ist Teil des Deckelelements 60, während der Druckluftanschluss 42 und die Druckluftleitung 40 wahlweise entweder im Deckelelement 60 oder im Auslaufelement 61 ausgebildet sein können. Der hohle Dorn als Teil des Deckelelements 60 steht also schon in Fluidverbindung mit dem Reservoir 6 bevor die Durchgangsöffnung 62 geöffnet wird. Die Mischkammer 8 weist zudem noch die separate Fluidzuführung 12 auf, durch welche die Mischkammer 8 mit insbesondere gekühlten und/oder karbonisierten Trinkwasser gespeist wird. Die Fluidzuführung 12 ist im vorliegenden Beispiel Teil des Auslaufelements 61.

Vorzugsweise werden sowohl die Fluidquelle 91 als auch die Druckluftquelle 41 direkt an die Fluidzuführung 12 bzw. den Druckluftanschluss 42 angekoppelt, sobald das Kartuschensystem 1 in die Getränkezubereitungsmaschine 3 eingesetzt wird oder ein Getränkeherstellungsprozess gestartet wird und insbesondere bevor die Durchgangsöffnung 62 geöffnet wird. Auf diese Weise wird eine Rückkontamination in Richtung der Getränkezubereitungsmaschine 3 wirksam vermieden, weil die Fluidzuführung 12 und die Kartuschenentladeeinrichtung 34 sofort beim Einsetzen des Kartuschensystems 1 unter Überdruck steht und somit verhindert wird, dass Getränkesubstanz 7 in Richtung der Fluidquelle 91 bzw. Druckluftquelle 41 wandert. Die Getränkesubstanz 7 kann sich ausgehend vom Reservoir 6 somit lediglich in Richtung der Mischkammer 8 bewegen, sobald die Durchgangsöffnung 62 geöffnet wird.

In Figuren 3a bis 3g sind schematische Ansichten einer Kartuschenaufnahme 10 und eines Kartuschensystems 1 gemäß einer zweiten Ausführungsform der vorliegenden Erfindung illustriert.

Die zweite Ausführungsform unterscheidet sich von der ersten Ausführungsform dadurch, dass die Kartuschenaufnahme 10 nicht mehr zweiteilig (separates Deckelelement 60 und Auslaufelement 61) sondern einteilig ausgeführt ist, d.h. Deckelelement 60 und Auslaufelement 61 sind als gemeinsames Teil (die Kartuschenaufnahme 10) ausgebildet, welches auf die Kartusche 2 in oben beschriebener Weise aufgeclipst wird und Mischkammer 8, Getränkeauslauf 11, Kartuschenentladeeinrichtung 34 und Fluidzuführung 12 aufweist. Damit die Kartusche 2 während der Lagerung und des Transports des Kartuschensystems 1 aromadicht verschlossen ist, wird bei der vorliegenden Ausführungsform die Kartuschenöffnung 63 mit einem Dichtelement 18 in Form einer dünnen Dichtfolie verschlossen. Nach der Herstellung der Kartusche 2 im Blas-Spritzform-Verfahren wird die Dichtfolie auf den Rand der Kartuschenöffnung 63 geklebt oder gesiegelt (siehe Figur 3a). Erst anschließend wird die Kartuschenaufnahme 10 auf die Kartusche 2 aufgeclipst (siehe Figur 3b).

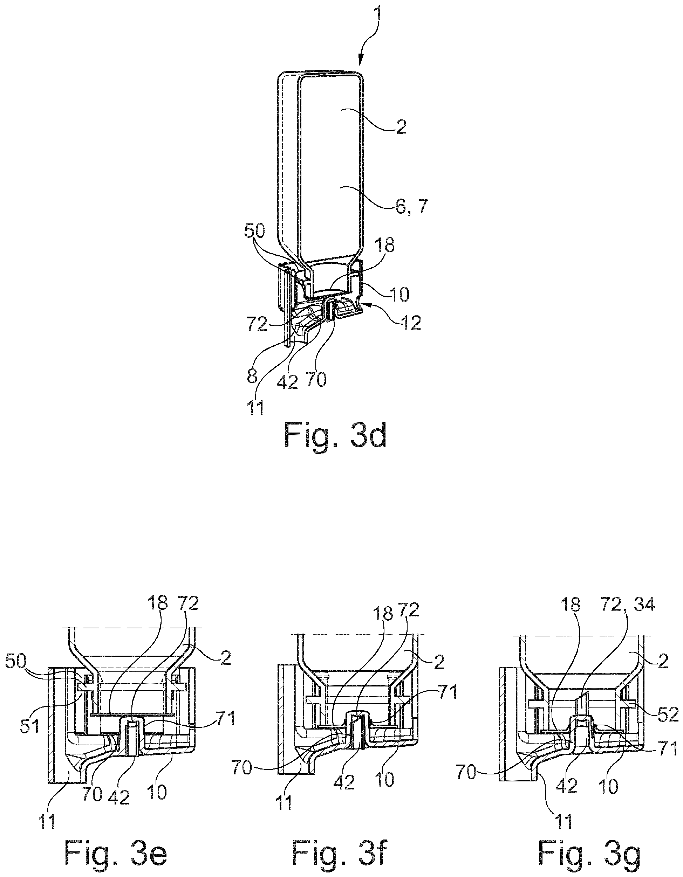

In Figur 3c ist eine Alternative gezeigt, in welcher die Kartusche 2 nicht im Blas-Spritzform-Verfahren, sondern im Spritzform-Verfahren hergestellt ist. Die Kartusche 2 weist hier eine weitere Kartuschenöffnung auf, die durch eine weitere Dichtfolie 19 verschlossen wird, indem die weitere Dichtfolie 19 analog auf den Rand der weiteren Kartuschenöffnung gesiegelt wird. Da hier zwei Siegelschritte notwendig sind, ist diese Alternative jedoch weniger bevorzugt. Die Figuren 3d bis 3g basieren daher wieder auf der in Figuren 3a und 3b gezeigten Kartusche 2.

Die Kartuschenaufnahme 10 offenbart in der zweiten Ausführungsform nun einen feststehenden Aufstechdorn 73 auf, welcher in Richtung der Kartusche 2 vorsteht. Durch eine Relativbewegung zwischen der Kartusche 2 und dem Aufnahmeelement 10 aufeinander zu, durchsticht der Aufstechdorn 73 das Dichtelement 18. Nach der Herstellung des Kartuschensystems 1 sitzt die Kartusche 2 zunächst in einer Vorposition innerhalb der Kartuschenaufnahme 10, in welcher der Aufstechdorn 73 von dem Dichtelement 18 beabstandet ist. Erst unmittelbar vor, während oder unmittelbar nach dem Einbringen des Kartuschensystems 1 in die Getränkezubereitungsmaschine 3 oder unmittelbar nach dem Einleiten des Getränkeherstellungsprozesses wird die Kartusche 2 von dieser Vorposition in eine Endposition überführt, in welcher der Aufstechdorn 73 das Dichtelement 18 durchstößt. Beim Überführen der Kartusche 2 von der Vorposition in die Endposition werden die Kartusche 2 und die Kartuschenaufnahme 10 translatorisch weiter aufeinander zu bewegt, wobei das Dichtelement 18 bei dieser Bewegung aktiv vom Aufstechdorn 73 durchstochen wird (Vgl. Figur 3e => Figur 3f). Der Aufstechdorn 73 ragt anschließend durch das Dichtelement 18 in der Kartuschenöffnung 63 in Richtung des Reservoirs 6. Auf der Außenseite des Aufstechdorns 73 sind eine Mehrzahl von Seitenkanäle 71 eingebracht, welche in Form von parallel zueinander verlaufenden einseitig offenen Nuten ausgebildet sind. Nach dem Durchstechen des Dichtelements 18 gelangen die Seitenkanäle 71 in Fluidverbindung mit dem Reservoir 6, so dass die Getränkesubstanz 7 die Ränder des durchstochenen Dichtelements 18 in Richtung der Mischkammer 8 umfließen kann.

Auch bei dieser Ausführungsform ist der Querschnitt der Seitenkanäle 71 und/oder die Anzahl der Seitenkanäle 71 vorzugsweise an die Viskosität der Getränkesubstanz 7 angepasst, so dass die Seitenkanäle 71 den Fluss der Getränkesubstanz 7 in Richtung Mischkammer 8 kontrollieren bzw. begrenzen. Bei einer hohen Viskosität werden mehrere Seitenkanäle 71 und/oder Seitenkanäle 71 mit größerem Querschnitt verwendet, während bei einer niedrigeren Viskosität weniger Seitenkanäle 71 und/oder Seitenkanäle 71 mit geringerem Querschnitt vorgesehen sind.

Der Aufstechdorn 73 weist eine Durchgangsbohrung auf, in welcher eine Druckluftspitze 72 bewegbar angeordnet ist. Die Druckluftspitze 72 kann zwischen einer eingefahrenen Position, in welcher die Druckluftspitze 72 in Richtung des Reservoirs 6 nicht über den Aufstechdorn 73 hinausragt (dargestellt in Figur 3f), und einer ausgefahrenen Position, in welcher die Druckluftspitze 72 über den Aufstechdorn 73 bis in die Kartuschenöffnung 62 bzw. in das Reservoir 6 ragt (dargestellt in Figur 3g), verschoben werden. In die Druckluftspitze 72 ist die Druckluftleitung 40 integriert, welche mit dem Druckluftanschluss 42 verbunden ist. An einer dem Reservoir 6 insbesondere abgewandten Seite der Druckluftspitze 72 ist der Druckluftanschluss 42 ausgebildet, so dass er von außerhalb der Kartuschenaufnahme 10 zugänglich ist und direkt an die Druckluftquelle 41 der Getränkezubereitungsmaschine 3 angeschlossen werden kann.

Die Druckluftspitze 72 wird von der eingefahrenen Position in Richtung der ausgefahrenen Position überführt, nachdem das Dichtelement 18 von dem Aufstechdorn 73 perforiert wurde. Mit Hilfe der Druckluftspitze 72 wird sodann Druckluft in das Reservoir 6 eingeblasen, so dass die Getränkesubstanz 7 durch die Seitenkanäle 71 in die Mischkammer 8 gedrückt wird. Innerhalb der Mischkammer 8 vermischt sich die Getränkesubstanz 7 mit dem Fluid und bildet so das Getränk 70. Denkbar ist, dass die Druckluftspitze 72 beim oder nach dem Einsetzen des Kartuschensystems 1 in die Getränkezubereitungsmaschine 3 oder nach dem Start des Getränkeherstellungsprozesses von der eingefahrenen Position in die ausgefahrene Position überführt wird. Dies erfolgt insbesondere indem Druckluft an die Druckluftspitze 72 angelegt wird und so die Druckluftspitze 72 von der eingefahrenen Position in die ausgefahrene Position verfahren wird.

Vorzugsweise werden sowohl die Fluidquelle 91 als auch die Druckluftquelle 41 direkt an die Fluidzuführung 12 bzw. den Druckluftanschluss 42 angekoppelt, sobald das Kartuschensystem 1 in die Getränkezubereitungsmaschine 3 eingesetzt wird oder ein Getränkeherstellungsprozess gestartet wird und insbesondere bevor das Dichtelement 18 durchstochen wird. Auf diese Weise wird eine Rückkontamination in Richtung der Getränkezubereitungsmaschine 3 wirksam vermieden, weil die Fluidzuführung 12 und die Kartuschenentladeeinrichtung 34 sofort beim Einsetzen des Kartuschensystems 1 unter Überdruck steht und somit verhindert wird, dass Getränkesubstanz 7 in Richtung der Fluidquelle 91 bzw. Druckluftquelle 41 wandert. Die Getränkesubstanz 7 kann sich ausgehend vom Reservoir 6 somit lediglich in Richtung der Mischkammer 8 bewegen, sobald das Dichtelement 18 geöffnet wird.

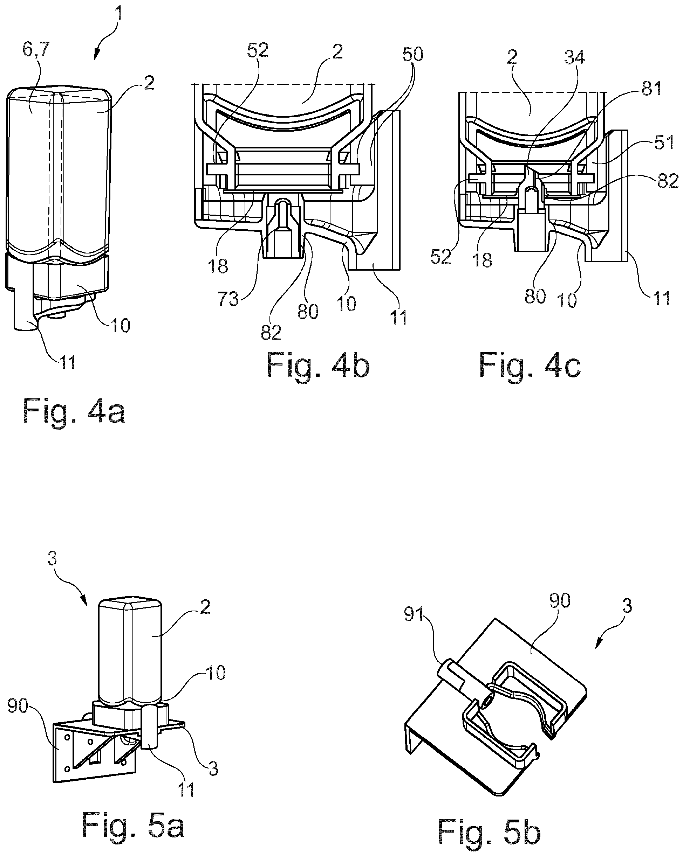

In **Figuren 4a bis 4c** sind schematische Ansichten einer Kartuschenaufnahme 10 und eines Kartuschensystems 1 gemäß einer dritten Ausführungsform der vorliegenden Erfindung illustriert. Die dritte Ausführungsform ähnelt der anhand von Figuren 3a bis 3g illustrierten zweiten Ausführungsform, wobei bei der dritten Ausführungsform im Unterschied zur zweiten Ausführungsform der Aufstechdorn 73 jedoch nicht fest mit der Kartuschenaufnahme 10 verbunden ist, sondern die Kartuschenaufnahme 10 stattdessen eine Dornführung 80 aufweist, in welcher der Aufstechdorn 73 verschiebbar gelagert ist. Das Dichtelement 18 wird hier nicht durch eine Relativbewegung zwischen Kartusche 2 und Kartuschenaufnahme 10 geöffnet, sondern durch eine Überführung des verschiebbaren Aufstechdorns 73 zwischen einer eingefahrenen Position, in welcher der Aufstechdorn 73 von dem Dichtelement 18 beabstandet ist (Vgl. Figur 4b), und einer ausgefahrenen Position, in welcher der Aufstechdorn 73 das Dichtelement 18 durchsticht (Vgl. Figur 4c) und bis in die Kartuschenöffnung 63 bzw. in das Reservoir 6 ragt.

Die Außenwandung des Aufstechdorns 73 ist wiederum mit der Mehrzahl von Seitenkanälen 82 zum Leiten der Getränkesubstanz 7 in Richtung der Mischkammer 8, wenn das Dichtelement 18 durchstochen ist, versehen, wie bei der zweiten Ausführungsform bereits beschrieben wurde. In den Aufstechdorn 73 ist ferner die Druckluftleitung 40 integriert. Der Aufstechdorn 73 weist ferner aber keine bewegliche Druckluftspitze 72, wie in der zweiten Ausführungsform auf, sondern die Druckluftleitung 40 mündet durch eine feststehende Druckluftspitze 72 am Ende des Aufstechdorns 73 in die Kartuschenöffnung 63. Insofern ist hier - anders als bei der zweiten Ausführungsform - auch keine Verlagerung der Druckluftspitze 72 relativ zum Aufstechdorn 73 notwendig. Vielmehr ragt die Druckluftspitze 72 automatisch in die Durchgangsöffnung 63, wenn der Aufstechdorn 73 in die ausgefahrene Position verschoben wurde.

Erneut ist an einer dem Reservoir 6 insbesondere abgewandten Seite des Aufstechdorns 73 der Druckluftanschluss 42 ausgebildet, der somit von außerhalb der Kartuschenaufnahme 10 zugänglich und an die Druckluftquelle 41 der Getränkezubereitungsmaschine 3 anschließbar ist. Vorzugsweise wird der Aufstechdorn 73 beim oder nach dem Einsetzen des Kartuschensystems 10 in die Getränkezubereitungsmaschine 3 oder nach dem Starten des Getränkeherstellungsprozesses von der eingefahrenen Position in die ausgefahrene Position überführt, vorzugsweise durch Druckluft, die beim Anschließen der Druckluftquelle 41 an den Druckluftanschluss 42, der am unteren Ende des Aufstechdorns 73 ausgebildet ist, in die Kartuschenentladeeinrichtung 34 einströmt.

Analog zur zweiten Ausführungsform ist auch bei der dritten Ausführungsform vorzugsweise vorgesehen, dass sowohl die Fluidquelle 91 als auch die Druckluftquelle 41 direkt an die Fluidzuführung 12 bzw. den Druckluftanschluss 42 angekoppelt werden, sobald das Kartuschensystem 1 in die Getränkezubereitungsmaschine 3 eingesetzt wird oder ein Getränkeherstellungsprozess gestartet wird und insbesondere bevor das Dichtelement 18 durchstochen wird. Auf diese Weise wird eine Rückkontamination in Richtung der Getränkezubereitungsmaschine 3 wirksam vermieden, weil die Fluidzuführung 12 und die Kartuschenentladeeinrichtung 34 sofort beim Einsetzen des Kartuschensystems 1 unter Überdruck steht und somit verhindert wird, dass Getränkesubstanz 7 in Richtung der Fluidquelle 91 bzw. Druckluftquelle 41 wandert. Die Getränkesubstanz 7 kann sich ausgehend vom Reservoir 6 somit lediglich in Richtung der Mischkammer 8 bewegen, sobald das Dichtelement 18 geöffnet wird.

In **Figuren 5a** ist schematische Ansicht einer Kartuschenaufnahme 10 und eines Kartuschensystems 1 gemäß der ersten, zweiten oder dritten Ausführungsform der vorliegenden Erfindung eingesetzt in eine Halteeinheit 90 einer Getränkezubereitungsmaschine 3 dargestellt. In **Figur 5b** ist eine Detailansicht der Halteeinheit 90 gezeigt, welche im Wesentlichen aus einer Aufnahme für die Kartuschenaufnahme 10 besteht, sowie eine zur Fluidquelle 91 der Getränkezubereitungsmaschine 3 laufende Leitung zum Anschluss an die Fluidzuführung des Kartuschensystems 1 umfasst.

### Bezugszeichenliste

- 1: Kartuschensystem
- 2: Kartusche
- 3: Getränkezubereitungsmaschine
- 6: Reservoir
- 7: Getränkesubstanz
- 8: Mischkammer
- 10: Kartuschenaufnahme
- 11: Getränkeauslauf
- 12: Fluidzuführung
- 18: Dichtelement
- 19: Weiteres Dichtelement
- 34: Kartuschenentladeeinrichtung
- 40: Druckluftleitung
- 41: Druckluftquelle
- 42: Druckluftanschluss
- 43: Druckluftauslass
- 50: Rastverbindung
- 51: Rastelemente
- 52: Halteflansch 52
- 60: Deckelelement
- 61: Auslaufelement
- 62: Durchgangsöffnung
- 63: Kartuschenöffnung
- 64: Vorsprung
- 65, 71, 82: Seitenkanal
- 70: Getränk
- 71: Seitenkanal
- 72: Druckluftspitze
- 73: Aufstechdorn
- 80: Dornführung
- 81: Aufstechdorn
- 82: Seitenkanal
- 90: Halteeinheit
- 91: Fluidquelle

## Patentansprüche

1. Kartuschensystem (1) zur Herstellung eines Getränks (70), wobei das Kartuschensystem (1) in eine Getränkezubereitungsmaschine (3) einsetzbar ist, wobei das Kartuschensystem (1) eine Kartusche (2), die ein mit einer Getränkesubstanz (7) gefülltes Reservoir (6) umfasst, und eine mit der Kartusche (2) verbundene Kartuschenaufnahme (10) aufweist, wobei die Kartuschenaufnahme (10) in die Getränkezubereitungsmaschine (3) einsetzbar ist und mit der Kartusche (2) verbindbar ist, wobei die Kartuschenaufnahme (10) eine mit dem Reservoir (6) in Fluidverbindung bringbare Mischkammer (8) und eine in die Mischkammer (8) mündende Fluidzuführung (12) aufweist, wobei die Kartuschenaufnahme (10) eine Kartuschenentladeeinrichtung (34), welche zum zumindest teilweisen Überführen der Getränkesubstanz (7) vom Reservoir (6) in die Mischkammer (8) vorgesehen ist, aufweist, **dadurch gekennzeichnet, dass** die Kartuschenentladeeinrichtung (34) einen Druckluftanschluss (42) zum Anschluss an die Druckluftquelle (41) und eine Druckluftleitung (40) umfasst, welche sich vom Druckluftanschluss (42) zu einem Druckluftauslass (43) erstreckt, und wobei der Druckluftauslass (43) in Richtung des Reservoirs (6) der Kartusche (2) vorsteht, um Druckluft in das Reservoir (6) einzublasen, wobei die Kartuschenentladeeinrichtung (34) derart ausgebildet ist, dass durch die Druckluft die Getränkesubstanz (7) aus dem Reservoir (6) in die Mischkammer (8) gedrückt wird, wobei die Kartusche (2) eine mit dem Reservoir (6) in Fluidverbindung stehende Kartuschenöffnung (63) aufweist, wobei die Kartuschenöffnung (63) mit einem Dichtelement (18) verschlossen ist, wobei das Dichtelement (18) eine Dichtfolie umfasst, die auf den Rand der Kartuschenöffnung (63) aufgebracht ist, wobei die Kartuschenaufnahme (10) eine Dornführung (80) und einen innerhalb der Dornführung (80) verschiebbar gelagerten Aufstechdorn (81) umfasst, wobei der Aufstechdorn (81) zwischen einer eingefahrenen Position, in welcher der Aufstechdorn (81) von dem Dichtelement (19) beabstandet ist, und einer ausgefahrenen Position, in welcher der Aufstechdorn (81) das Dichtelement (18) durchsticht und bis in das Reservoir (6) ragt, verschiebbar ist, wobei in den Aufstechdorn (81) die Druckluftleitung (40) integriert ist.

2. Kartuschensystem (1) nach Anspruch 1, wobei die Kartuschenaufnahme (10) mit der Kartusche (2) über eine Rastverbindung (50) lösbar verbindbar ist.

3. Kartuschensystem (1) nach einem der vorhergehenden Ansprüche, wobei in die Außenwandung des Aufstechdorns (81) wenigstens einen Seitenkanal (82) zum Leiten der Getränkesubstanz (7) in Richtung der Mischkammer (8), wenn das Dichtelement (18) durchstochen ist, eingebracht ist.

4. Kartuschensystem (1) nach einem der vorhergehenden Ansprüche, wobei an einer dem Reservoir (6) abgewandten Seite des Aufstechdorns (81) der Druckluftanschluss (42) ausgebildet ist, wobei der Druckluftanschluss (42) vorzugsweise von außerhalb der Kartuschenaufnahme (10) zugänglich ist.

5. Kartuschensystem (1) nach einem der vorhergehenden Ansprüche, wobei der Aufstechdorn (81) beim Einsetzen des Kartuschensystems (1) in die Getränkezubereitungsmaschine von einem Auslöseelement der Getränkezubereitungsmaschine von der eingefahrenen Position in die ausgefahrene Position überführt wird.

6. Kartuschensystem (1) nach einem der vorhergehenden Ansprüche, wobei die Fluidzuführung (12) mit Fluid gespeist wird, welches durch ein Kühlaggregat gekühlt wird, wobei das Kühlaggregat Teil der Getränkezubereitungsmaschine oder eines mit der Getränkezubereitungsmaschine in Wirkverbindung stehenden separaten Kühlschranks ist.

7. Kartuschensystem (1) nach Anspruch 6, wobei das Kühlaggregat eine Kompressorkühleinheit, eine Absorberkühleinheit oder einen thermoelektrischen Kühler umfasst.

8. Kartuschensystem (1) nach einem der vorhergehenden Ansprüche, wobei die Fluidzuführung (12) mit Fluid gespeist wird, welches durch einen Karbonisierer mit Kohlensäure versetzt wird.

9. Kartuschensystem (1) nach Anspruch 8, wobei der Karbonisierer Teil der Getränkezubereitungsmaschine (3) ist und wobei der Karbonisierer eine Aufnahme für eine CO₂-Patrone und eine Zuführeinrichtung zum Versetzen des Fluides mit CO₂ aus der CO₂-Patrone aufweist.

10. Getränkezubereitungsmaschine (3) zur Herstellung eines Getränks (70), in welche ein Kartuschensystem (1) nach einem der vorhergehenden Ansprüche eingesetzt wird, wobei die Getränkezubereitungsmaschine (3) eine Halteeinheit (90) aufweist, in welche die mit der Kartusche (2) verbundene Kartuschenaufnahme (10) einsetzbar ist, eine Fluidquelle (91) zum Einspeisen des Fluid in die Fluidzuführung (12) und eine Druckluftquelle (41) zum Einblasen von Druckluft in den Druckluftanschluss (42).

11. Getränkezubereitungsmaschine (3) nach Anspruch 10, wobei die Getränkezubereitungsmaschine (3) das Auslöseelement zum Überführen der des Aufstechdorns (81) von der eingefahrenen Position in die ausgefahrene Position aufweist.

12. Verfahren zur Herstellung eines Getränks (70) mit einem Kartuschensystem (1) nach einem der Ansprüche 1 bis 9 und einer Getränkezubereitungsmaschine nach einem der Ansprüche 10 oder 11, mit den folgenden Schritten:
- Einsetzen des Kartuschensystems (1) in eine Halteeinheit (90) der Getränkezubereitungsmaschine (3),
- Überführen der Getränkesubstanz (7) aus dem Reservoir (6) der Kartusche (2) in die Mischkammer (8) der Kartuschenaufnahme (10) mittels der Kartuschenentladeeinrichtung (34),
- Einspeisen eines Fluides in die Mischkammer (8) mittels der Fluidzuführung (12),
- Ableiten des in der Mischkammer (8) durch Vermischung der Getränkesubstanz (7) mit dem Fluid erzeugten Getränks (70) mittels eines Getränkeauslaufs (11).

13. Verfahren nach Anspruch 12, wobei die Getränkesubstanz (7) durch Druckluft aus dem Reservoir (6) in die Mischkammer (8) überführt wird.

14. Verfahren nach einem der Ansprüche 12 oder 13, wobei das Fluid vor dem Einspeisen in die Mischkammer (8) gekühlt und/oder karbonisiert wird.

15. Verfahren nach einem der Ansprüche 12 bis 14, wobei vor, beim oder nach dem Einsetzen des Kartuschensystems (1) in die Halteeinheit (90) ein Aufstechdorn (81) von einer eingefahrenen Position in eine ausgefahrene Position überführt wird und ein Dichtelement (18) an der Kartuschenöffnung (63) perforiert.

## Claims

1. Cartridge system (1) for producing a beverage (70), wherein the cartridge system (1) is insertable into a beverage preparation machine (3), wherein the cartridge system (1) has a cartridge (2), which comprises a reservoir (6) filled with a beverage substance (7), and a cartridge receptacle (10), which is connected to the cartridge (2), wherein the cartridge receptacle (10) is insertable into the beverage preparation machine (3) and is connected to the cartridge (2), wherein the cartridge receptacle (10) has a mixing chamber (8), which is able to be brought into fluidic connection with the reservoir (6), and a fluid supply (12) which opens out into the mixing chamber (8), wherein the cartridge receptacle (10) has a cartridge unloading device (34) which is provided for at least partially transferring the beverage substance (7) from the reservoir (6) into the mixing chamber (8), **characterized in that** the cartridge unloading device (34) comprises a compressed air connection (42) for connecting to the compressed air source (41) and a compressed air line (40) which extends from the compressed air connection (42) to a compressed air outlet (43), and wherein the compressed air outlet (43) projects in the direction of the reservoir (6) of the cartridge (2) so as to inject compressed air into the reservoir (6), wherein the cartridge unloading device (34) is configured in such a manner that the beverage substance (7) is pushed from the reservoir (6) into the mixing chamber (8) by the compressed air, wherein the cartridge (2) has a cartridge opening (63) which is fluidically connected to the reservoir (6), wherein the cartridge opening (63) is closed with a sealing element (18), wherein the sealing element (18) comprises a sealing film which is applied to the periphery of the cartridge opening (63), wherein the cartridge receptacle (10) comprises a mandrel guide (80) and a piercing mandrel (81) which is mounted so as to be displaceable within the mandrel guide (80), wherein the piercing mandrel (81) is displaceable between a retracted position in which the piercing mandrel (81) is spaced apart from the sealing element (19), and a deployed position in which the piercing mandrel (81) pierces the sealing element (18) and protrudes into the reservoir (6), wherein the compressed air line (40) is integrated in the piercing mandrel (81).

2. Cartridge system (1) according to Claim 1, wherein the cartridge receptacle (10) is able to be releasably connected to the cartridge (2) by way of a latching connection (50).

3. Cartridge system (1) according to one of the preceding claims, wherein at least one side channel (82) for directing the beverage substance (7) in the direction of the mixing chamber (8) when the sealing element (18) is pierced is incorporated in the external wall of the piercing mandrel (81).

4. Cartridge system (1) according to one of the preceding claims, wherein the compressed air connection (42) is configured on a side of the piercing mandrel (81) that faces away from the reservoir (6), wherein the compressed air connection (42) is preferably accessible from outside the cartridge receptacle (10).

5. Cartridge system (1) according to one of the preceding claims, wherein the piercing mandrel (81), when inserting the cartridge system (1) into the beverage preparation machine, is transferred from the retracted position to the deployed position by a trigger element of the beverage preparation machine.

6. Cartridge system (1) according to one of the preceding claims, wherein the fluid supply (12) is fed with fluid which is cooled by a cooling apparatus, wherein the cooling apparatus is part of the beverage preparation machine or of a separate refrigerator that is operatively connected to the beverage preparation machine.

7. Cartridge system (1) according to Claim 6, wherein the cooling apparatus comprises a compressor cooling unit, an absorber cooling unit, or a thermoelectric cooler.

8. Cartridge system (1) according to one of the preceding claims, wherein the fluid supply (12) is fed with fluid which is carbonated by a carbonizer.

9. Cartridge system (1) according to Claim 8, wherein the carbonizer is part of the beverage preparation machine (3), and wherein the carbonizer has a receptacle for a CO₂ cartridge and a supply device for carbonating the fluid with CO₂ from the CO₂ cartridge.

10. Beverage preparation machine (3) for producing a beverage (70), into which beverage preparation machine (3) a cartridge system (1) according to one of the preceding claims is inserted, wherein the beverage preparation machine (3) has a holder unit (90) into which the cartridge receptacle (1) connected to the cartridge (2) is insertable, a fluid source (91) for feeding the fluid into the fluid supply (12), and a compressed air source (41) for injecting compressed air into the compressed air connection (42).

11. Beverage preparation machine (3) according to Claim 10, wherein the beverage preparation machine (3) has the trigger element for transferring the piercing mandrel (81) from the retracted position to the deployed position.

12. Method for producing a beverage (70) by a cartridge system (1) according to one of Claims 1 to 9, and by a beverage preparation machine according to Claim 10 or 11, comprising the following method steps:
- inserting the cartridge system (1) into a holder unit (90) of the beverage preparation machine (3) ;
- transferring the beverage substance (7) from the reservoir (6) of the cartridge (2) into the mixing chamber (8) of the cartridge receptacle (10) by means of the cartridge unloading device (34);
- feeding a fluid into the mixing chamber (8) by means of the fluid supply (12);
- discharging the beverage (70), which has been generated by mixing the beverage substance (7) with the fluid in the mixing chamber (8), by means of a beverage outlet (11).

13. Method according to Claim 12, wherein the beverage substance (7) is transferred from the reservoir (6) into the mixing chamber (8) by compressed air.

14. Method according to one of Claims 12 or 13, wherein the fluid is cooled and/or carbonated prior to feeding into the mixing chamber (8).

15. Method according to one of Claims 12 to 14, wherein when or after inserting the cartridge system (1) into the holder unit (90), a piercing mandrel (81) is transferred from a retracted position to a deployed position, and a sealing element (18) on the cartridge opening (63) is perforated.

## Revendications

1. Système à cartouche (1) destiné à la production d'une boisson (70), le système à cartouche (1) pouvant être utilisé dans une machine de préparation de boissons (3), le système à cartouche (1) présentant une cartouche (2) qui comporte un réservoir (6) rempli d'une substance de boisson (7) et un réceptacle de cartouche (10) relié à la cartouche (2), le réceptacle de cartouche (10) pouvant être inséré dans la machine de préparation de boissons (3) et pouvant être relié à la cartouche (2), le réceptacle de cartouche (10) présentant une chambre de mélange (8) qui peut être amenée en liaison fluidique avec le réservoir (6) et une conduite d'alimentation en fluide (12) qui débouche dans la chambre de mélange (8), le réceptacle de cartouche (10) présentant un dispositif de décharge de cartouche (34) qui est prévu pour transférer au moins partiellement la substance de boisson (7) du réservoir (6) jusque dans la chambre de mélange (8), **caractérisé en ce que** le dispositif de décharge de cartouche (34) comporte un raccord d'air comprimé (42) destiné à être raccordé à la source d'air comprimé (41) et une conduite d'air comprimé (40) qui s'étend du raccord d'air comprimé (42) à une sortie d'air comprimé (43), et la sortie d'air comprimé (43) faisant saillie en direction du réservoir (6) de la cartouche (2) pour insuffler de l'air comprimé dans le réservoir (6), le dispositif de décharge de cartouche (34) étant conçu de manière à ce que l'air comprimé presse la substance de boisson (7) hors du réservoir (6) dans la chambre de mélange (8), la cartouche (2) présentant une ouverture de cartouche (63) en liaison fluidique avec le réservoir (6), l'ouverture de cartouche (63) étant fermée à l'aide d'un élément d'étanchéité (18), l'élément d'étanchéité (18) comportant une feuille d'étanchéité qui est appliquée sur le bord de l'ouverture de cartouche (63), le réceptacle de cartouche (10) comprenant un guide de mandrin (80) et un mandrin de perçage (81) monté de manière coulissante à l'intérieur du guide de mandrin (80), le mandrin de perçage (81) pouvant coulisser entre une position rétractée, dans laquelle le mandrin de perçage (81) est espacé de l'élément d'étanchéité (19), et une position déployée dans laquelle le mandrin de perçage (81) transperce l'élément d'étanchéité (18) et fait saillie jusque dans le réservoir (6), la conduite d'air comprimé (40) étant intégrée dans le mandrin de perçage (81).

2. Système à cartouche (1) selon la revendication 1, le réceptacle de cartouche (10) pouvant être relié de manière amovible à la cartouche (2) par le biais d'une liaison à encliquetage (50).

3. Système à cartouche (1) selon l'une des revendications précédentes, au moins un canal latéral (82) servant à guider la substance de boisson (7) en direction de la chambre de mélange (8) lorsque l'élément d'étanchéité (18) est transpercé étant ménagé dans la paroi extérieure du mandrin de perçage (81).

4. Système à cartouche (1) selon l'une des revendications précédentes, le raccord d'air comprimé (42) étant réalisé sur un côté du mandrin de perçage (81) opposé au réservoir (6), le raccord d'air comprimé (42) étant accessible de préférence depuis l'extérieur du réceptacle de cartouche (10).

5. Système à cartouche (1) selon l'une des revendications précédentes, le mandrin de perçage (81), lors de l'insertion du système à cartouche (1) dans la machine de préparation de boissons, étant transféré par un élément de déclenchement de la machine de préparation de boissons de la position rétractée à la position déployée.

6. Système à cartouche (1) selon l'une des revendications précédentes, la conduite d'alimentation en fluide (12) étant alimentée en fluide qui est refroidi par une unité de refroidissement, l'unité de refroidissement faisant partie de la machine de préparation de boissons ou d'un réfrigérateur séparé qui est en liaison fonctionnelle avec la machine de préparation de boissons.

7. Système à cartouche (1) selon la revendication 6, l'unité de refroidissement comportant une unité de refroidissement à compresseur, une unité de refroidissement à absorbeur ou un refroidisseur thermoélectrique.

8. Système à cartouche (1) selon l'une des revendications précédentes, la conduite d'alimentation en fluide (12) étant alimentée en fluide qui est carbonaté par un carbonateur.

9. Système à cartouche (1) selon la revendication 8, le carbonateur faisant partie de la machine de préparation de boissons (3) et le carbonateur présentant un réceptacle destiné à une cartouche de CO₂ et un dispositif d'alimentation destiné à ajouter au fluide du CO₂ provenant de la cartouche de CO₂.

10. Machine de préparation de boissons (3) destinée à la production d'une boisson (70), dans laquelle un système à cartouche (1) selon l'une des revendications précédentes est inséré, la machine de préparation de boissons (3) présentant une unité de retenue (90), dans laquelle le réceptacle de cartouche (10) relié à la cartouche (2) peut être inséré, une source de fluide (91) destinée à injecter le fluide dans la conduite d'alimentation en fluide (12) et une source d'air comprimé (41) destinée à insuffler de l'air comprimé dans le raccord d'air comprimé (42).

11. Machine de préparation de boissons (3) selon la revendication 10, la machine de préparation de boissons (3) présentant l'élément de déclenchement pour le transfert du mandrin de perçage (81) de la position rétractée à la position déployée.

12. Procédé de production d'une boisson (70) à l'aide d'un système à cartouche (1) selon l'une des revendications 1 à 9 et d'une machine de préparation de boissons selon l'une des revendications 10 ou 11, ledit procédé comprenant les étapes suivantes :
- insérer le système à cartouche (1) dans une unité de retenue (90) de la machine de préparation de boissons (3) ,
- transférer la substance de boisson (7) du réservoir (6) de la cartouche (2) jusque dans la chambre de mélange (8) du réceptacle de cartouche (10) au moyen du dispositif de décharge de cartouche (34),
- injecter un fluide dans la chambre de mélange (8) au moyen de la conduite d'alimentation en fluide (12),
- évacuer la boisson (70), produite dans la chambre de mélange (8) par mélange de la substance de boisson (7) au fluide, au moyen d'une sortie de boisson (11).

13. Procédé selon la revendication 12, la substance de boisson (7) étant transférée du réservoir (6) dans la chambre de mélange (8) par de l'air comprimé.

14. Procédé selon l'une des revendications 12 ou 13, le fluide étant refroidi et/ou carbonaté avant d'être injecté dans la chambre de mélange (8).

15. Procédé selon l'une des revendications 12 à 14, dans lequel, avant, lors de ou après l'insertion du système à cartouche (1) dans l'unité de retenue (90), un mandrin de perçage (81) est transféré d'une position rétractée à une position déployée et un élément d'étanchéité (18) au niveau de l'ouverture de cartouche (63) est perforé.
